# EUROPÄISCHE PATENTSCHRIFT

(11) **EP 2 428 483 B1**
(45) Veröffentlichungstag und Bekanntmachung des Hinweises auf die Patenterteilung: **08.05.2013**
(21) Anmeldenummer: 11007042.2
(22) Anmeldetag: 30.08.2011
(51) Int. Cl.: B66F 9/24, B66F 9/075, H02K 49/04, B60L 7/28, H02P 15/00, B60L 7/18

(54) **Flurförderzeug mit einem elektrischen Fahrantrieb**
Industrial truck having an electrical propulsion drive
Chariot de manutention ayant une propulsion électrique

(30) Priorität: 08.09.2010 DE 102010044655
(43) Veröffentlichungstag der Anmeldung: 14.03.2012
(73) Patentinhaber: Jungheinrich Aktiengesellschaft, 22047 Hamburg (DE)
(72) Erfinder: Harnisch, Carsten, 22143 Hamburg (DE); Plachta, Dominik, 24568 Oersdorf (DE); Geilsdorf, Hendrik, 22417 Hamburg (DE)
(74) Vertreter: Hauck Patent- und Rechtsanwälte

(56) Entgegenhaltungen:
- DE-A1- 1 563 966
- DE-A1- 10 310 105
- DE-A1-102006 051 264
- DE-A1-102009 006 196
- DE-C1- 19 547 464
- JP-A- 2007 082 337
- US-A- 6 084 325
- US-A1- 2003 010 584
- US-A1- 2010 039 054

## Beschreibung

Die vorliegende Erfindung betrifft ein Flurförderzeug mit einem elektrischen Fahrantrieb, der von einer Steuerung in einen generatorischen Betrieb zum Abbremsen des Flurförderzeugs umgeschaltet werden kann. In dem generatorischen Betrieb wird der Fahrantrieb als Generator eingesetzt, dessen erzeugter Strom in eine Batterie eingespeist wird.

Aus EP 2 006 563 A1 ist eine automatische Federspeicherbremse für ein Flurförderzeug bekannt. Bei dem bekannten Flurförderzeug kann eine Magnetanordnung in Form einer Wirbelstrombremse vorgesehen sein, die mit einer mit Reibbelegen versehenen Bremse zusammenwirkt.

Aus DE 10 2009 006 196 A1 ist eine angetriebene Fahrzeugachse bekannt geworden, die einen elektrischen Antriebsmotor und eine Wirbelstrombremse aufweist. Es ist eine Steuerung vorgesehen, mit der die Wirbelstrombremse derart angesteuert werden kann, dass die Wirbelstrombremse zusätzlich zur Bremswirkung des elektrischen Antriebs wirkt und die Bremswirkung maximiert wird.

Aus DE 10 2006 051 264 A1 ist ein Flurförderzeug mit einer Bremsvorrichtung bekannt geworden, das einen elektrischen oder hydraulischen Antriebsmotor für den Fahrantrieb sowie mindestens eine Bremsvorrichtung zum Abbremsen einer Fahrbewegung des Gabelstaplers aufweist, wobei die Bremsvorrichtung als eine Wirbelstrombremse ausgebildet ist. Bei der Verwendung eines elektrischen Antriebsmotors wird dieser ausschließlich als Motor, nicht aber als Generator betrieben.

Aus DE 10 2006 019 494 A1 ist ein Bremssystem für ein Fahrzeug mit Elektromotor bekannt, das eine mechanische Bremse sowie zusätzlich eine elektrische Bremse aufweist. Abhängig von einer Betätigung einer Bremsbetätigungscinrichtung wird zunächst nur die elektrische Bremse und anschließend die mechanische Bremse aktiviert.

Aus DE 197 31 847 A1 ist eine Steuer- und/oder Regelvorrichtung für einen Retarder als Zusatzbremseinrichtung, insbesondere für Fahrzeuge, bekannt. Die Steuer- und Regelvorrichtung weist einen steuerbaren Leistungshalbleiter als Stellglied für den durch den Retarder fließenden Strom auf, der in Abhängigkeit eines oder mehrerer Betriebsparameter des Fahrzeugs einstellbar ist. Ein besonderes Merkmal an der Steuer- und Regelvorrichtung ist, dass diese bei einer Geschwindigkeit unterhalb eines Schwellwerts automatisch abgeschaltet wird.

Aus DE 103 10 105 A1 ist ein Regelungs-Algorithmus für ein Wirbelstrom-Bremssystem bekannt geworden, bei dem abhängig von einem ermittelten Rückkopplungsstrom einer Retarderbaugruppe und einer Rotorgeschwindigkeit der Retarderbaugruppe ein Steuerstrom als Funktion des Rückkkopplungsstroms bestimmt wird.

Aus DE 39 08 234 A1 ist eine Zusatzbremseinrichtung für Lastkraftwagen und Omnibusse mit einer elektrischen Wirbelstrombremse bekannt geworden, bei der, um eine möglichst geringe Belastung des Bordnetzes während des Betriebs der Wirbelstrombremse zu erreichen, die Wirbelstrombremse mit einem eigenen elektrischen Generator ausgestattet ist, dessen Erregerstrom dem Fahrzeugbordnetz entnommen wird.

Aus GB 2 387 418 A ist ein Regelalgorithmus für eine Wirbelstrombremse in einem Motorfahrzeug bekannt. Zur Regelung der Wirbelstrombremse wird ein Rückkopplungsstrom von der Wirbelstrombremse und eine Rotorgeschwindigkeit des Rotors der Wirbelstrombremse bestimmt und aus einem Sollwert für die Wirbelstrombremse der Steuerstrom für die Wirbelstrombremse über einen Regler ermittelt.

Aus US 2010/0039054 A1 ist die Steuerung eines Fahrzeugs bekannt, bei dem mit Hilfe eines mechanisch betriebenen Generators elektrische Leistung für einen elektrischen Fahrantrieb bereit gestellt wird. Wenn bei Verwendung einer Wirbelstrombremse die von dieser erzeugte elektrische Leistung größer als die für den Fahrantrieb benötigte Leistung ist, wird der elektrische Fahrantrieb aus der Wirbelstrombremse gespeist.

Aus EP 2 006 563 A1 ist eine automatische Federspeicherbremse für ein Flurförderzeug bekannt, das eine elektromagnetisch betätigbare Feststellbremse aufweist.

Aus WO 2007/053889 A1 ist ein elektrischer Fahrantrieb für ein Fahrzeug bekannt, bei dem eine Bremsscheibe zugleich als Rotor für einen elektrischen Motor ausgebildet ist.

Für das Abbremsen von Flurförderzeugen ist der Einsatz einer einstufigen Reibbremse oft nicht geeignet, da diese mit einer Auslegung auf die maximale Last ein Fahrzeug ohne Last zu stark abbremst.

Für elektrisch betriebene Flurförderzeuge, wie beispielsweise Schubmaststapler, Nieder-/Hochhubwagen und dergleichen ist es bekannt, den Fahrmotor als Generator einzusetzen. Bei der Auslegung des Fahrantriebs wird die Anforderung an den Motorbetrieb abgestellt mit dem Ziel, die Leistung des Fahrantriebs aus Gründen der Wirtschaftlichkeit und der Energieeffizienz möglichst gering zu halten. Dies führt jedoch insbesondere bei hohen Geschwindigkeiten und hohen Nutzlasten dazu, dass die Leistung des Fahrantriebs im Generatorbetrieb für das Erreichen der geforderten Bremswege oft nicht ausreicht.

Der Erfindung liegt die Aufgabe zugrunde, ein Flurförderzeug mit einem elektrischen Fahrantrieb bereitzustellen, der im generatorischen Betrieb für eine Abbremsung des Flurförderzeugs eingesetzt werden kann, wobei für das Flurförderzeug ein ausreichend großes Bremsmoment erzeugt wird, um dieses auch im beladenen Zustand an Rampen und/oder bei nahezu vollgeladener Fahrzeugbatterie zuverlässig abbremsen zu können.

Erfindungsgemäß wird die Aufgabe durch ein Flurförderzeug mit den Merkmalen aus Anspruch 1 gelöst. Vorteilhafte Ausgestaltungen bilden den Gegenstand der Unteransprüche.

Das erfindungsgemäße Flurförderzeug ist mit einem elektrischen Fahrantrieb und einer Steuerung ausgestattet, die den elektrischen Fahrantrieb in einen generatorischen Betrieb zum Abbremsen des Flurförderzeugs umschalten kann. Der dabei gewonnene Rückspeisestrom wird bevorzugt zum Wiederaufladen der Fahrzeugbatterie verwendet. Das erfindungsgemäße Flurförderzeug ist ferner mit einer Wirbelstrombremse ausgestattet, die von der Steuerung während des generatorischen Betriebs des Fahrantriebs zum Abbremsen des Flurförderzeugs gesteuert oder geregelt wird. Erfindungsgemäß erfolgt bei dem Flurförderzeug während des generatorischen Betriebs des Fahrantriebes ein zusätzliches Abbremsen des Flurförderzeugs durch eine Wirbelstrombremse, deren erzeugtes Bremsmoment von der Steuerung gesteuert oder geregelt wird. Der Vorteil der zusätzlich eingesetzten Wirbelstrombremse liegt darin, dass weiterhin eine Auslegung des elektrischen Fahrantriebs entsprechend den Anforderungen an den Fahrbetrieb des Flurförderzeugs erfolgen kann. Die Wirbelstrombremse wird zusätzlich bei einem generatorischen Bremsen eingesetzt, um einen möglicherweise auftretenden, zu großen Rückspeisestrom und damit eine Batterieüberspannung zu verhindern oder bei großen Lasten ein zusätzliches Bremsmoment für das Flurförderzeug zu erzeugen.

Erfindungsgemäß steuert oder regelt die Steuerung die Wirbelstrombremse abhängig von einer Drehzahl des elektrischen Fahrantriebs. Dem liegt die Erkenntnis zugrunde, dass bei einem elektrischen Fahrantrieb, insbesondere bei großen Drehzahlen im generatorischen Betrieb es nur zu einem geringen Bremsmoment kommt. Dieses geringe Bremsmoment bei großen Drehzahlen wird durch das von der Wirbelstrombremse erzeugte Bremsmoment ergänzt, indem die Wirbelstrombremse ein zusätzliches Bremsmoment erzeugt. Die Erfindung schafft somit die Möglichkeit, auch bei großen Drehzahlen, bei denen der gcncratorische Betrieb nur ein geringes Bremsmoment bereitstellt, ein ausreichend starkes Bremsmoment durch die zusätzliche Ansteuerung der Wirbelstrombremse zu erzielen.

In einer besonders bevorzugten Ausgestaltung gibt die Steuerung einen Sollwert für das von der Wirbelstrombremse zu erzeugende Bremsmoment vor und steuert die Wirbelstrombremse entsprechend dem Sollwert an oder regelt die Wirbelstrombremse auf den entsprechenden Sollwert ein. In dieser Ausgestaltung arbeitet die Bremssteuerung als Sollwertgeber für die Wirbelstrombremse, um das gewünschte Bremsmoment für das Flurförderzeug durch die Wirbelstrombremse zu erzeugen.

In einer bevorzugten Ausgestaltung ermittelt die Steuerung den Sollwert für das Bremsmoment der Wirbelstrombremse abhängig von der Drehzahl des elektrischen Fahrantriebs. Bevorzugt ist der von der Steuerung vorgegebene Sollwert abhängig von der Drehzahl, wobei mit abnehmender Drehzahl der Sollwert für die Wirbelstrombremse in dem Maße abnimmt, in dem das Bremsmoment aus dem generatorischen Betrieb zunimmt. Dies bedeutet, dass ein etwaiges zu niedriges Bremsmoment des elektrischen Fahrantriebs in seinem generatorischen Betrieb bei hohen Drehzahlen durch einen entsprechend vorgegebenen Sollwert für das Bremsmoment der Wirbelstrombremse ergänzt wird. Bevorzugt bestimmt die Steuerung den Sollwert für die Wirbelstrombremse derart, dass ein resultierendes Bremsmoment aus dem generatorischen Betrieb des Fahrantriebs und der Wirbelstrombremse konstant ist. Auf diese Weise kann für das Flurförderzeug stets ein konstantes Bremsmoment erzeugt werden, so dass auch bei hohen Drehzahlen des elektrischen Fahrantriebs eine zuverlässige Abbremsung des Fahrzeugs erfolgt.

In einer bevorzugten Weiterbildung des erfindungsgemäßen Flurförderzeugs ist vorgesehen, dass die Steuerung den Sollwert für die Wirbelstrombremse während des Bremsvorganges dynamisch vorgibt, um ein Blockieren des oder der Antriebsräder beim Bremsen zu verhindern. Wirbelstrombremsen eignen sich im besonderen Maße dazu, eine ABS-Funktion zu realisieren.

In einer bevorzugten Ausgestaltung der Erfindung kann auch alternativ oder zusätzlich eine Ansteuerung oder Regelung der Wirbelstrombremse abhängig von einer crfassten Batteriespannung erfolgen. Die Steuerung ist hierfür ausgelegt, die im generatorischen Betrieb des Fahrantriebs auftretende Batteriespannung zu erfassen und mit einem vorbestimmten Maximalwert zu vergleichen. In einem Fall, in dem der Maximalwert für die Batteriespannung überschritten wird, kann das Bremsmoment des generatorisch betriebenen Fahrantriebs reduziert und das Bremsmoment in der Wirbelstrombremse erhöht werden. In dieser Ausgestaltung kann vermieden werden, dass durch einen zu hohen Rückspeisestrom Überspannungen auftreten, die einen Notstopp in dem Flurförderzeug auslösen.

Alternativ kann auch ein Wert für den Rückspeisestrom abhängig vom Ladezustand der Fahrzeugbatterie erfasst, mit einem Maximalwert für den Rückspeisestrom verglichen und bei Überschreiten des Maximalwerts das Moment des Fahrantriebs reduziert werden, bei gleichzeitiger Erhöhung des Bremsmoments der Wirbelstrombremse. Hierdurch wird sichergestellt, dass unabhängig von dem Ladezustand der Batterie ein gleichmäßiges Bremsen mit einem entsprechend hohen Bremsmoment der Wirbelstrombremse erfolgt.

In einer weiteren bevorzugten Ausgestaltung erfasst die Steuerung eine von dem Flurförderzeug aufgenommene Last und erhöht den Sollwert für das Bremsmoment der Wirbelstrombremse entsprechend der Last. Auch hier wird lastabhängig das für das Flurförderzeug notwendige Gesamtbremsmoment eingestellt.

Die vorliegende Erfindung wird nachfolgend anhand von Figuren näher erläutert. Es zeigt:
- Fig. 1: eine schematische Ansicht des angetriebenen Rades bei einem Flurförderzeug mit einer Wirbelstrombremse,
- Fig. 2: eine Drehzahl-Drehmoment-Kennlinie eines elektrischen Fahrantriebs und
- Fig. 3: das mit einer geregelten Wirbelstrombremse an dem Flurförderzeug erzeugte Bremsmoment,
- Fig. 4: eine lastabhängige Vorgabe des Bremsmoments für die Wirbelstrombremse,
- Fig. 5: ein schematisches Ablaufdiagramm für eine Erhöhung des Bremsmoments der Wirbelstrombremse abhängig von der Batteriespannung und
- Fig. 6: eine schematische Ansicht einer Regelung des Bremsmoments anhand einer vorgegebenen Drehzahl- oder Geschwindigkeitsrampe.

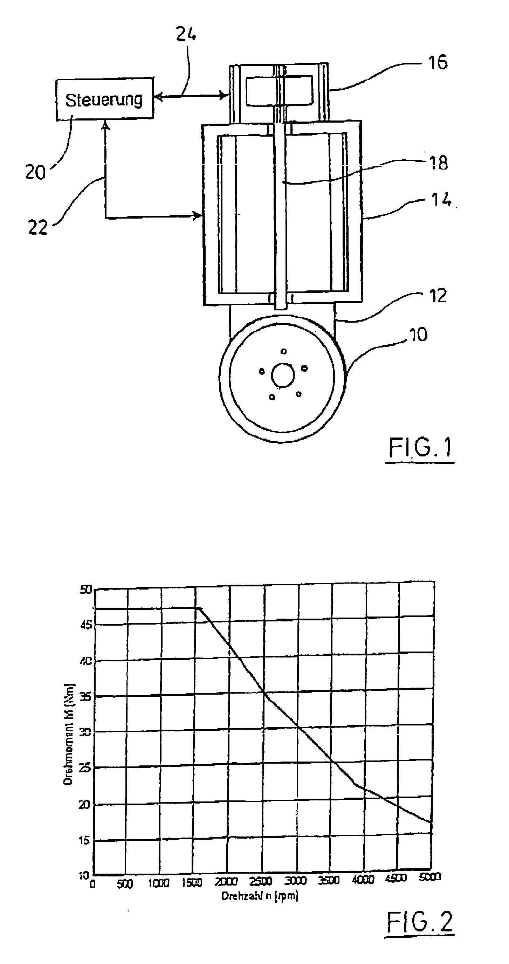

Fig. 1 zeigt schematisch den Aufbau für einen Fahrantrieb an einem Flurförderzeug. Ein Antriebsrad 10 wird über ein ein- oder mehrstufiges Getriebe 12 mit Hilfe eines elektrischen Fahrmotors 14 angetrieben. Der elektrische Fahrmotor ist beispielsweise ein Drehstrom-Asynchronmotor, es können aber auch andere elektrische Maschinen, wie beispielsweise Synchronmotoren, eingesetzt werden. Auf dem vom Antriebsrad fortweisenden Ende des Fahrmotors ist eine Systembremse vorgesehen, die eine Wirbelstrombremse und eine zusätzliche Feststellbremse aufweist. Die Systembremse 16 wirkt direkt auf den Anker 18 des Fahrmotors 14. Eine Steuerung 20 ist vorgesehen, die über eine Verbindung 22 eine Motordrehzahl und einen Motorstrom erfasst. Ebenfalls über die Verbindung 22 werden aktuelle Sollgrößen für den elektrischen Fahrantrieb an diesen angelegt. Über die Verbindung 24 erfolgt eine Regelung der Wirbelstrombremse innerhalb der Systembremse 16. Die Regelung der Wirbelstrombremse erfolgt mit dem Ziel, das Bremsmoment möglichst konstant zu halten.

Fig. 2 zeigt anhand einer Drehzahl-Drehmoment-Kennlinie beispielhaft das Verhalten der als Fahrantrieb eingesetzten elektrischen Maschine. Mit zunehmender Drehzahl fällt das zur Verfügung stehende Drehmoment deutlich ab. Die Kennlinie zeigt im Wesentlichen den Verlauf unabhängig davon, ob es sich um das Antriebsmoment der als Motor betriebenen elektrischen Maschine oder das Bremsmoment der generatorisch betriebenen elektrischen Maschine handelt. Durch ein generatorisches Bremsen wird also bei hoher Geschwindigkeit, mithin bei hoher Drehzahl, nur ein niedriges Bremsmoment aufgebracht, das möglicherweise nicht ausreicht, um einen vorgeschriebenen Bremsweg für das Fahrzeug einzuhalten.

Eine Erhöhung des Bremsmoments durch eine Erhöhung des Rückspeisestroms über das in Fig. 2 dargestellte Niveau hinaus ist nicht möglich, da die fahrzcugspezifischen Steuerungen aus Gründen der Betriebsfestigkeit (maximaler Strom, Temperatur) ihrer Komponenten nur begrenzte Rückspeiseströme bei der generatorischen Abbremsung dauerhaft verarbeiten können. Beim Überschreiten vorgegebener Maximaltemperaturen begrenzt beispielsweise die Fahrsteuerung deshalb die Leistung des Fahrzeugs durch eine Geschwindigkeits- oder Leistungsreduzierung.

Weiterhin tritt bei Überschreiten des maximal zulässigen Rückspeisestroms in der Steuerung eine Überspannung auf, die zu einem Notstopp führt. Der häufigste Fall für das Eintreten einer solchen Überspannung ist erfahrungsgemäß eine Betriebsabbremsung auf Rampen (Steigungsfahrt) bei nahezu vollgeladener Fahrzeugbatterie, da diese nicht in der Lage ist, den durch den Generatorbetrieb produzierten Rückspeisestrom aufzunehmen. Dies gilt insbesondere für Batterien mit niedriger Kapazität, so dass häufig Batterien mit höherer Kapazität verbaut werden müssen, als es technisch notwendig ist.

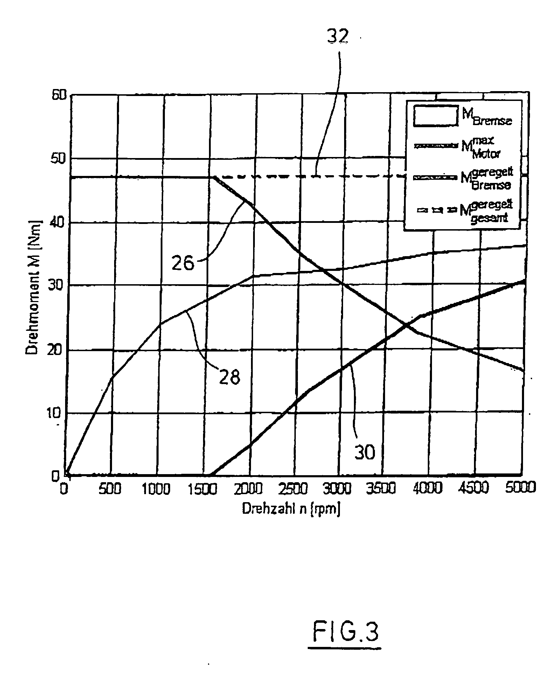

Fig. 3 zeigt den prinzipiellen Drehzahl-Drehmoment-Verlauf 26 einer Asynchronmaschine. Ebenfalls in der Fig. 3 ist der Drehzahl-Drehmoment-Verlauf 28 in einer Wirbelstrombremse dargestellt. Deutlich zu erkennen ist, dass das von einer Wirbelstrombremse erzeugte Bremsmoment bei niedrigen Drehzahlen geringer ist als bei hohen Drehzahlen. Generatorisches Bremsen und Wirbelstrombremse verhalten sich also in Bezug auf die Drehzahl komplementär zueinander. Die Kennlinie 28 zeigt das Bremsmoment einer Wirbelstrombremse bei ihrem nicht geregelten Betrieb. In einem geregelten Betrieb der Wirbelstrombremse kann für jede Drehzahl ein Bremsmoment vorgegeben werden, das kleiner als der durch die Kennlinie 28 vorgegebene Maximalwert für das Bremsmoment ist. Die Kennlinie 30 zeigt das geregelte Bremsmoment einer Wirbelstrombremse. Das geregelte Bremsmoment 30 ist in Fig. 3 so gewählt, dass mit schwächer werdendem Bremsmoment 26 des Fahrantriebs sich stets ein konstantes Bremsmoment 32 über den gesamten Drehzahlbereich ergibt. Die Summe aus dem Bremsmoment des Motors zusammen mit dem Bremsmoment der Wirbelstrombremse ergibt somit ein konstantes Bremsmoment 32.

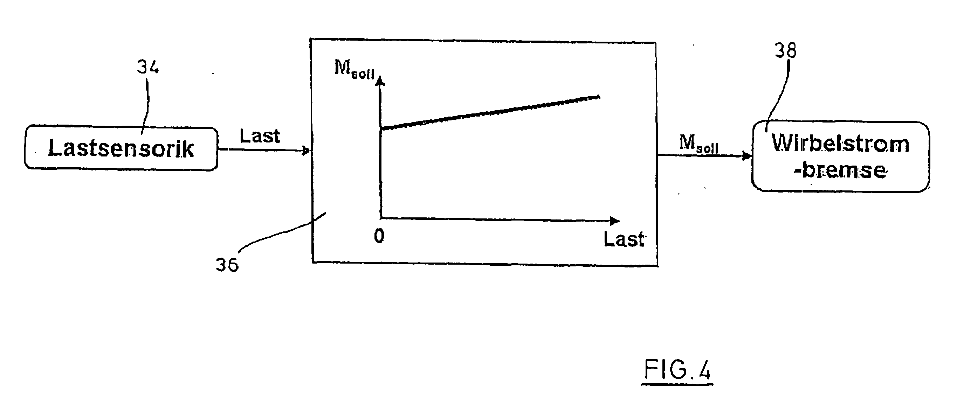

Neben der vorstehend beschriebenen drehzahlabhängigen Ansteuerung der Wirbelstrombremse kann alternativ oder zusätzlich eine lastabhängige Ansteuerung der Wirbelstrombremse gemäß Fig. 4 vorgesehen sein. Bei dieser Ausgestaltung besitzt das Flurförderzeug einen Lastsensor 34, der einen Wert für die von dem Flurförderzeug aufgenommene Last ermittelt. Mit Hilfe einer Kennlinie 36 wird abhängig von der Last des Flurförderzeugs ein Sollwert Mₛₒₗₗ für das Bremsmoment der Wirbelstrombremse ermittelt. Der sich aus der Kennlinie 36 ergebende Sollwert für das Bremsmoment wird an die Wirbelstrombremse 38 angelegt. In dieser Ausgestaltung erfolgt das Zuschalten der Wirbelstrombremse während des Bremsvorgangs abhängig von der Last am Flurförderzeug. Hierdurch wird sichergestellt, dass bei einem vollbeladenen Flurförderzeug die Wirbelstrombremse 38 mit einem stärkeren Bremsmoment zugeschaltet wird als bei einem nur teilweise beladenen Flurförderzeug. Auf diese Weise wird vermieden, dass ein nicht mit Maximallast belastetes Flurförderzeug zu stark abgebremst wird, wodurch eine Gefährdung des Fahrzeugführers oder ein Verrutschen der Last möglich wäre.

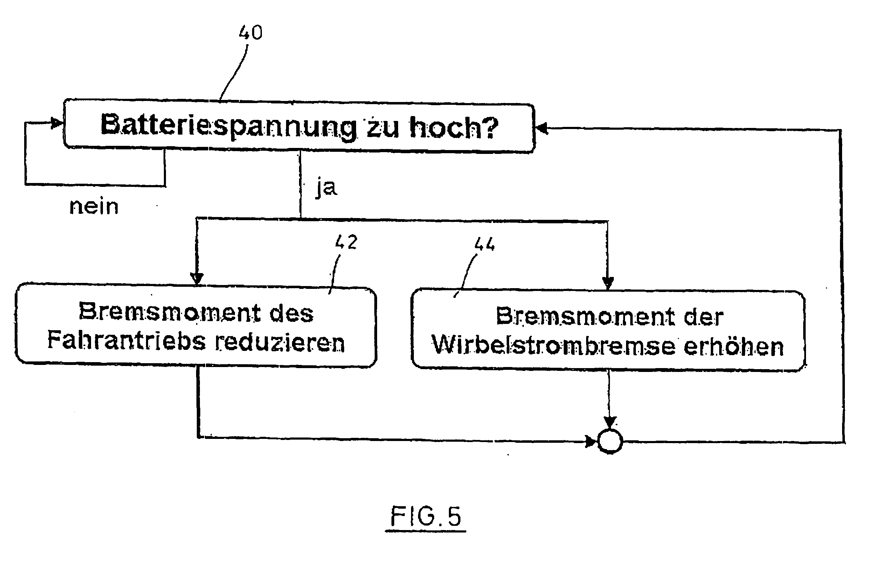

Fig. 5 zeigt eine alternative Ausgestaltung, die auch zusätzlich zu der lastabhängigen und/oder der drehzahlabhängigen Ansteuerung der Wirbelstrombremse eingesetzt werden kann. Bei dieser Ausgestaltung wird von der Steuerung 20 in einem ersten Schritt 40 die aktuell vorliegende Batteriespannung mit einem vorgegebenen Maximalwert für die Batteriespannung verglichen. Wird der vorgegebene Maximalwert für die Batteriespannung überschritten, so wird in Verfahrensschritt 42 das Bremsmoment des Fahrantriebs reduziert und in Verfahrensschritt 44 das Bremsmoment der Wirbelstrombremse erhöht. Durch das Reduzieren des Bremsmoments des Fahrantriebes wird eine weitere Erhöhung der Batteriespannung vermieden, so dass ein Notstopp des Flurförderzeugs nicht ausgelöst werden muss. Die in Schritt 44 vorgesehene Erhöhung des Bremsmoments der Wirbelstrombremse kann unterschiedlich ausgelegt sein. Beispielsweise ist es möglich, das Bremsmoment der Wirbelstrombremse in dem Maße zu erhöhen, in dem das Bremsmoment des Fahrantriebs reduziert wird.

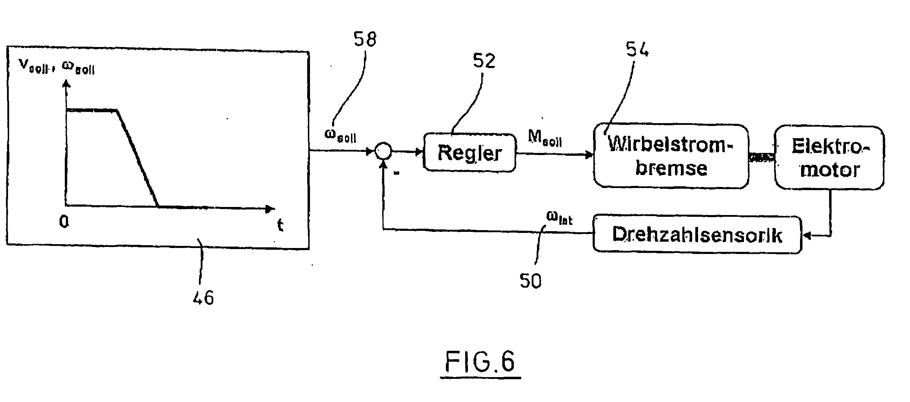

Fig. 6 zeigt in einer weiteren Ansicht schematisch eine Ansteuerung der Wirbelstrombremse abhängig von einer zeitabhängigen Drehzahl- oder Geschwindigkeitsrampe. Diese Ansteuerung der Wirbelstrombremse kann alternativ oder zusätzlich zu dem bereits erläuterten Verfahren zur Ansteuerung der Wirbelstrombremse eingesetzt werden.

Bei der Ansteuerung abhängig von einer Geschwindigkeitsrampe wird über eine Kennlinie 46 ein zeitabhängiger Sollwert für die Drehzahl 48 vorgegeben. Der Verlauf der Kennlinie 46 ist dabei so gewählt, dass nach Einsetzen des Bremsvorgangs rampenförmig der Sollwert für die Drehzahl auf null reduziert wird. Der aus der Kennlinie 46 sich ergebende Sollwert der Drehzahl 48 wird mit dem Istwert für die Drehzahl 50 verglichen und liegt an einem Regler 52 an. Der Regler 52 bildet aus der anliegenden Regeldifferenz den Sollwert für die Wirbelstrombremse 54. Die Wirbelstrombremse 54 wirkt auf den Fahrantrieb 56, so dass die Regelstrecke geschlossen ist. Durch das Verwenden von zeitabhängigen Sollwerten für die Drehzahl und/oder Geschwindigkeit des Flurförderzeugs kann ein sanftes Einsetzen der Wirbelstrombremse sichergestellt und eine Erschütterung des Fahrzeugs vermieden werden. Insgesamt greift die Wirbelstrombremse anfangs stark ein, da der Motor bei hoher Drehzahl ein schwaches Bremsmoment liefert. Bei sinkender Drehzahl erhöht sich das Moment des Motors und es sinkt das Moment der Wirbelstrombremse bis sie abgeschaltet wird.

## Patentansprüche

1. Flurförderzeug mit einem elektrischen Fahrantrieb (14) und einer Steuerung (20), die den elektrischen Fahrantrieb (14) in einen generatorischen Betrieb zum Abbremsen des Flurförderzeuges umschalten kann,
**dadurch gekennzeichnet, dass** eine Wirbelstrombremse (16) vorgesehen ist, die von der Steuerung (20) während des generatorischen Betriebs (14) zum Abbremsen des Flurförderzeugs angesteuert oder geregelt wird, wobei die Steuerung (20) einen Sollwert für das von der Wirbelstrombremse (16) zu erzeugende Bremsmoment abhängig von der Drehzahl des elektrischen Fahrantriebs vorgibt und die Wirbelstrombremse (16) entsprechend dem Sollwert ansteuert oder regelt, und wobei die Steuerung (20) den Sollwert für die Wirbelstrombremse (16) derart vorgibt, dass ein resultierendes Bremsmoment aus dem generatorischen Betrieb des Fahrantriebs und der Wirbelstrombremse konstant ist.

2. Flurförderzeug nach Anspruch 1, **dadurch gekennzeichnet, dass** die Steuerung (20) den Sollwert für das Bremsmoment der Wirbelstrombremse abhängig von der Drehzahl des elektrischen Fahrantriebs ermittelt.

3. Flurförderzeug nach einem der Ansprüche 1 bis 2, **dadurch gekennzeichnet, dass** die Steuerung (20) den Sollwert für die Wirbelstrombremse dynamisch vorgibt, um ein Blockieren des oder der Antriebsräder (10) beim Abbremsen zu verhindern.

4. Flurförderzeug nach einem der Ansprüche 1 bis 3, **dadurch gekennzeichnet, dass** die Steuerung (20) die im generatorischen Betrieb des Fahrantriebs auftretende Batteriespannung erfasst und mit einem vorbestimmten Maximalwert vergleicht, um im Falle eines Überschreitens des Maximalwerts das Bremsmoment des Fahrantriebs zu reduzieren und das Bremsmoment der Wirbelstrombremse zu erhöhen.

5. Flurförderzeug nach einem der Ansprüche 1 bis 3, **dadurch gekennzeichnet, dass** die Steuerung (20) den im generatorischen Betrieb des Fahrantriebs erzeugten Rückspeisestrom erfasst und mit einem vorbestimmten Maximalwert vergleicht, um im Fall eines Überschreitens des Maximalwerts das Bremsmoment des Fahrantriebs (14) zu reduzieren und das Bremsmoment der Wirbelstrombremse zu erhöhen.

6. Flurförderzeug nach Anspruch 5, **dadurch gekennzeichnet, dass** der Maximalwert für den Rückspeisestrom abhängig von dem Ladezustand einer Fahrzeugbatterie gewählt wird.

7. Flurförderzeug nach einem der Ansprüche 1 bis 6, **dadurch gekennzeichnet, dass** die Steuerung (20) eine von dem Flurförderzeug aufgenommene Last erfasst und den Sollwert für das Bremsmoment der Wirbelstrombremse entsprechend der Last wählt.

8. Flurförderzeug nach einem der Ansprüche 1 bis 7, **dadurch gekennzeichnet, dass** die Steuerung (20) zeitabhängig einen Sollwert für das Bremsmoment der Wirbelstrombremse vorgibt.

9. Flurförderzeug nach Anspruch 8, **dadurch gekennzeichnet, dass** die Steuerung (20) während des Bremsvorganges zeitabhängig einen Sollwert für eine Drehzahl oder für eine Geschwindigkeit vorgibt, auf den durch das Bremsmoment die Wirbelstrombremse geregelt wird, wobei der zeitabhängige Sollwert rampenförmig den Wert null annimmt.

## Claims

1. An industrial truck with an electric travel drive (14) and controls (20) that can switch the electric travel drive (14) to regenerative operation to brake the industrial truck,
**characterized in that** an eddy current brake (16) is provided that can be controlled or regulated by the controls (20) during regenerative operation (14) to brake the industrial truck, wherein the controls (20) specify a setpoint for the braking torque to be generated by the eddy current brake (16) depending on the rotational speed of the electric travel drive and controls or regulates the current brake (16) corresponding to the setpoint, and wherein the controls (20) specifies the setpoint for eddy current brake (16) in a manner such that a braking torque resulting from the regenerative operation of the travel drive and the eddy current brake is constant.

2. The industrial truck according to claim 1, **characterized in that** the controls (20) determine the setpoint for the braking torque of the eddy current brake depending on the rotational speed of the electric travel drive.

3. The industrial truck according to one of claims 1 to 2, **characterized in that** the controls (20) dynamically specify the setpoint for the eddy current brake to prevent the drive wheel or wheels from locking (10) while braking.

4. The industrial truck according to one of claims 1 to 3, **characterized in that** the controls (20) detect the battery voltage arising in regenerative operation of the travel drive and compare it with a predetermined maximum value in order to reduce the braking torque of the travel drive and increase the braking torque of the current brake in case the maximum value of the braking torque is exceeded.

5. The industrial truck according to one of claims 1 to 3, **characterized in that** the controls (20) detect the regenerative current generated in regenerative operation of the travel drive and compare it with a predetermined maximum value in order to reduce the braking torque of the travel drive (14) and increase the braking torque of the eddy current brake in case the maximum value is exceeded.

6. The industrial truck according to claim 5, **characterized in that** the maximum value for the regenerative current is selected depending on the charge of a vehicle battery.

7. The industrial truck according to one of claims 1 to 6, **characterized in that** the controls (20) detect a load taken on by the industrial truck and select the setpoint for the braking current of the eddy current brake corresponding to the load.

8. The industrial truck according to one of claims 1 to 7, **characterized in that** the controls (20) specify a setpoint for the braking torque of the eddy current brake depending on the time.

9. The industrial truck according to claim 8, **characterized in that** the controls (20) specify, in a time-dependent manner, a setpoint while braking for the rotational speed or speed at which the eddy current brake is regulated by the braking torque, and the time-dependent setpoint assumes the value zero in a ramp-like fashion.

## Revendications

1. Chariot de manutention ayant une propulsion électrique (14) et une commande (20) permettant de faire passer la propulsion électrique (14) à un fonctionnement en mode générateur pour freiner le chariot de manutention,
**caractérisé en ce qu'**il est prévu un frein à courants de Foucault (16) actionné ou réglé par la commande (20) pendant le fonctionnement en mode générateur (14) pour freiner le chariot de manutention, dans lequel la commande (20) indique une valeur de consigne pour le couple de freinage à produire par le frein à courants de Foucault (16), en fonction du nombre de tours de la propulsion électrique, et actionne ou règle le frein à courants de Foucault (16) en fonction de la valeur de consigne, et dans lequel la commande (20) indique la valeur de consigne pour le frein à courants de Foucault de telle manière que le couple de freinage résultant du fonctionnement en mode générateur de la propulsion et du frein à courants de Foucault est constant.

2. Chariot de manutention selon la revendication 1, **caractérisé en ce que** la commande (20) indique la valeur de consigne pour le couple de freinage du frein à courants de Foucault en fonction du nombre de tours de la propulsion électrique.

3. Chariot de manutention selon l'une des revendications 1 à 2, **caractérisé en ce que** la commande (20) indique la valeur de consigne dynamiquement pour le frein à courants de Foucault, afin d'empêcher un blocage de la ou des roue(s) d'entraînement (10) lors du freinage.

4. Chariot de manutention selon l'une des revendications 1 à 3, **caractérisé en ce que** la commande (20) détecte la tension de batterie apparaissant pendant le fonctionnement de la propulsion en mode générateur et compare celle-ci avec une valeur maximale prédéfinie, afin de réduire le couple de freinage de la propulsion et d'augmenter le couple de freinage du frein à courants de Foucault en cas de dépassement de la valeur maximale.

5. Chariot de manutention selon l'une des revendications 1 à 3, **caractérisé en ce que** la commande (20) détecte le courant d'alimentation de retour produit pendant le fonctionnement de la propulsion en mode générateur et compare celui-ci avec une valeur maximale prédéfinie, afin de réduire le couple de freinage de la propulsion (14) et d'augmenter le couple de freinage du frein à courants de Foucault en cas de dépassement de la valeur maximale.

6. Chariot de manutention selon la revendication 5, **caractérisé en ce que** la valeur maximale pour le courant d'alimentation de retour est choisie en fonction de l'état de charge d'une batterie de véhicule.

7. Chariot de manutention selon l'une des revendications 1 à 6, **caractérisé en ce que** la commande (20) détecte une charge admise par le chariot de manutention et choisit la valeur de consigne pour le couple de freinage du frein à courants de Foucault en fonction de la charge.

8. Chariot de manutention selon l'une des revendications 1 à 7, **caractérisé en ce que** la commande (20) indique une valeur de consigne pour le couple de freinage du frein à courants de Foucault en fonction du temps.

9. Chariot de manutention selon la revendication 8, **caractérisé en ce que**, pendant l'opération de freinage, la commande (20) indique une valeur de consigne pour un nombre de tours ou pour une vitesse en fonction du temps, selon laquelle le frein à courants de Foucault est réglé par le couple de freinage, où la valeur de consigne dépendante du temps admet progressivement la valeur zéro.
